# EUROPEAN PATENT APPLICATION

(11) **EP 1 041 757 A2**
(43) Date of publication of application: **04.10.2000**
(21) Application number: 00302788.5
(22) Date of filing: 31.03.2000
(51) Int. Cl.: H04H 1/00, H04B 7/08

(54) **Receiver for receiving broadcasting signals comprising two tuners, at least one of which is a receiver for receiving a Digital Audio Broadcast signal, comprising a means for comparing the output signals of the two receivers as well as a means for selecting either of those signals**

(30) Priority: 31.03.1999 JP 9318799
(71) Applicant: SONY CORPORATION, Tokyo 141 (JP)
(72) Inventor: Oyagi, Kazuhiro, Shinagawa-ku, Tokyo (JP)
(74) Representative: Nicholls, Michael John

(57) **Abstract**

An apparatus for receiving broadcasting signals, which comprises first and second audio broadcasting signal receiving portions for receiving respectively first and second audio broadcasting signals, at least one of which is a digital audio broadcasting signal, to obtain first and second reproduced sound signals, each of which may represent substantially the same audio program information, a reproduced signal selecting portion operative to derive selectively the first and second reproduced sound signals obtained from the first and second audio broadcasting signal receiving portions, respectively, a level difference detecting portion for detecting a difference in level between the first and second reproduced sound signals and producing a level difference detection output signal representing a detected level difference, and a signal control portion operative to control one of the first and second reproduced sound signals in response to the level difference detection output signal so as to reduce a difference in level between the first and second reproduced sound signals derived selectively through the reproduced signal selecting portion.

## Description

The present invention relates generally to an apparatus for receiving broadcasting signals, and more particularly, to a broadcasting signal receiving apparatus which is operative to receive not only a digital audio broadcasting (DAB) signal but also an analog audio broadcasting signal, such as an amplitude-modulated (AM) audio broadcasting signal or a frequency-modulated (FM) audio broadcasting signal, for obtaining a reproduced sound signal.

Although an analog audio broadcasting system which includes an AM audio broadcasting system in which audio information signals are transmitted in the form of an AM audio information signal and an FM audio broadcasting system in which audio information signals are transmitted in the form of an FM audio information signal, has been put to practical use for a long time in the field of audio broadcasting, there has been recently proposed to introduce a digital audio broadcasting system in which audio information signals are transmitted in the form of a digital audio information signal for the purpose of improving quality of audio information transmitted or received in the system. Especially, in the European Continental, the digital audio broadcasting system called "DAB" has been already put to practical use in some countries.

It is expected that the digital audio broadcasting system would have great development henceforth so as to be in the mainstream in the field of audio broadcasting, in place of the analog audio broadcasting system, some time in the not so far future. However, at present, in a region wherein the digital audio broadcasting system has been already put to practical use or has been concretely planed to be materialized, a service area in which the digital audio information signal transmitted from a broadcasting station can be properly received is restricted to be relatively small. Accordingly, in the case where the digital audio broadcasting is actually carried out, the analog audio broadcasting is also carried out, in addition to the digital audio broadcasting, so that the same program is transmitted through each of the digital audio broadcasting and the analog audio broadcasting at the same time and therefore listeners who are in an area where the digital audio information signal cannot be properly received are able to enjoy the analog audio information signal .

In the digital audio broadcasting, the digital audio information signal is transmitted from a digital signal broadcasting station in the form of the digital audio broadcasting signal, and in the analog audio broadcasting, the analog audio information signal, such as the AM or FM audio information signal, is transmitted from an analog signal broadcasting station in the form of the analog audio broadcasting signal. The digital audio broadcasting signal transmitted in the digital audio broadcasting contains program information data which represent audio program information and program related data which represent information related to the audio program. The analog audio broadcasting signal transmitted in the analog audio broadcasting contains a program information signal which represents audio program information and a program related signal which represent information related to the audio program.

Under such a situation as mentioned above, it has been proposed to use a digital/analog broadcasting signal receiver which is an apparatus for receiving both the digital audio broadcasting signal transmitted from the digital signal broadcasting station and the analog audio broadcasting signal transmitted from the analog signal broadcasting station in an area in which both of the digital audio broadcasting and the analog audio broadcasting are put into practice. The digital/analog broadcasting signal receiver comprises a digital audio broadcasting signal receiving portion for receiving the digital audio broadcasting signal and obtaining a reproduced sound signal based on the received digital audio broadcasting signal (a reproduced digital broadcasting sound signal), an analog audio broadcasting signal receiving portion for receiving the analog audio broadcasting signal and obtaining a reproduced sound signal based on the received analog audio broadcasting signal (a reproduced analog broadcasting sound signal), and a reproduced signal selecting portion for deriving selectively the reproduced digital broadcasting sound signal and the reproduced analog broadcasting sound signal.

In the digital audio broadcasting signal receiving portion of the digital/analog broadcasting signal receiver, a received digital audio broadcasting signal is subjected to demodulation processing to produce program information data and program related data, and the program information data and the program related data are subjected to a time de-interleaving arrangement, by which the audio information data and the program related data are released from a time interleaving arrangement to revert to original audio information data, decoding processing, digital to analog conversion (D/A conversion) and so on, so that a reproduced digital broadcasting sound signal representing audio program information is obtained based on the program information data contained in the received digital audio broadcasting signal.

Meanwhile, in the analog audio broadcasting signal receiving portion of the digital/analog broadcasting signal receiver, a received analog audio broadcasting signal is subjected to demodulation processing and other signal processings, for example, frequency-demodulation processing, de-emphasis processing and so on in case of an FM audio broadcasting signal, so that a reproduced analog broadcasting sound signal representing audio program information is obtained based on the program information signal contained in the received analog audio broadcasting signal.

Accordingly, when the digital/analog broadcasting signal receiver is used under a situation in which the same program is transmitted through each of the digital audio broadcasting and the analog audio broadcasting at the same time, the reproduced digital broadcasting sound signal and the reproduced analog broadcasting sound signal, each of which represents the same audio program information, are obtained respectively through the digital audio broadcasting signal receiving portion and the analog audio broadcasting signal receiving portion of the digital/analog broadcasting signal receiver. Then, the reproduced digital broadcasting sound signal from the digital audio broadcasting signal receiving portion and the reproduced analog broadcasting sound signal from the analog audio broadcasting signal receiving portion are selectively derived through the reproduced signal selecting portion in such a manner that the reproduced digital broadcasting sound signal is selected when it is obtained appropriately and the reproduced analog broadcasting sound signal is selected when the reproduced digital broadcasting sound signal is not obtained appropriately.

In the case where the reproduced digital broadcasting sound signal and the reproduced analog broadcasting sound signal, each of which represents the same audio program information, are obtained respectively through the digital audio broadcasting signal receiving portion and the analog audio broadcasting signal receiving portion and selectively derived through the reproduced signal selecting portion in the digital/analog broadcasting signal receiver, as described above, it is usual that the reproduced digital broadcasting sound signal from the digital audio broadcasting signal receiving portion and the reproduced analog broadcasting sound signal from the analog audio broadcasting signal receiving portion have their respective levels different from each other. The reason for this is that the digital signal broadcasting station and the analog signal broadcasting station which conduct the digital audio broadcasting and the analog audio broadcasting, respectively, do not take usually effective steps for causing the digital audio broadcasting signal and the analog audio broadcasting signal to produce respectively the reproduced digital broadcasting sound signal and the reproduced analog broadcasting sound signal having their respective levels equal to each other in the digital/analog broadcasting signal receiver, there are differences in conditions of transmission, conditions of reception, manners of production of the reproduced digital broadcasting sound signal and the reproduced analog broadcasting sound signal, and so on, between the digital audio broadcasting signal and the analog audio broadcasting signal.

The above mentioned difference in level between the reproduced digital broadcasting sound signal and the reproduced analog broadcasting sound signal which are obtained to represent the same audio program information in the digital/analog broadcasting signal receiver, brings disadvantages on the digital/analog broadcasting signal receiver as descried below.

In the analog/digital broadcasting signal receiver, the reproduced digital broadcasting sound signal is selected to be derived by the reproduced signal selecting portion when it is obtained appropriately and the reproduced analog broadcasting sound signal is selected to be derived by the reproduced signal selecting portion when the reproduced digital broadcasting sound signal is not obtained appropriately and therefore the signal selection by the reproduced signal selecting portion may be changed from the reproduced digital broadcasting sound signal to the reproduced analog broadcasting sound signal or from the reproduced analog broadcasting sound signal to the reproduced digital broadcasting sound signal. When the change in the signal selection occurs with the difference in level between the reproduced digital broadcasting sound signal and the reproduced analog broadcasting sound signal, a discontinuation of signal resulting from the difference in level between the reproduced digital broadcasting sound signal and the reproduced analog broadcasting sound signal is caused between the reproduced digital or analog broadcasting sound signal which had been derived before the change in the signal selection by the reproduced signal selecting portion and the reproduced analog or digital broadcasting sound signal which is derived after the change in the signal selection by the reproduced signal selecting portion. This results in deterioration in quality of the reproduced sound signals obtained by the digital/analog broadcasting signal receiver.

Further, when the digital/analog broadcasting signal receiver in which the aforementioned discontinuation is caused between the reproduced digital broadcasting sound signal and the reproduced analog broadcasting sound signal is used to produce sound based on the reproduced digital broadcasting sound signal or the reproduced analog broadcasting sound signal, a listener to the sound is unwillingly required to control manually the level of the reproduced digital broadcasting sound signal or the reproduced analog broadcasting sound signal whenever the signal selection by the reproduced signal selecting portion is changed from the reproduced digital broadcasting sound signal to the reproduced analog broadcasting sound signal or from the reproduced analog broadcasting sound signal to the reproduced digital broadcasting sound signal.

Such disadvantages of the discontinuation of signal between a couple of reproduced sound signals as described above may be brought in not only the digital/analog broadcasting signal receiver in which the digital audio broadcasting signal and the analog audio broadcasting signal are received to produce the reproduced digital broadcasting sound signal and the reproduced analog broadcasting sound signal, each of which represents the same audio program information, by the digital audio broadcasting signal receiving potion and the analog audio broadcasting signal receiving potion, respectively, but also a broadcasting signal receiver in which a first audio broadcasting signal and a second audio broadcasting signal, which are different in type from each other, are received to produce a first reproduced sound signal and a second audio broadcasting signal, each of which represent the same audio program information, by a first audio broadcasting signal receiving potion and a second audio broadcasting signal receiving potion, respectively.

Accordingly, it is an object of the present invention to provide an apparatus for receiving broadcasting signals, in which first and second audio broadcasting signal receiving portions are provided for receiving respectively first and second audio broadcasting signals, at least one of which is a digital audio broadcasting signal, to obtain first and second reproduced sound signals, each of which may represent the same audio program information and one of which is selected to be derived from the first or second audio broadcasting signal receiving portion, and which avoids the aforementioned disadvantages encountered with the prior art.

Another object of the present invention is to provide an apparatus for receiving broadcasting signals, in which first and second audio broadcasting signal receiving portions are provided for receiving respectively first and second audio broadcasting signals, at least one of which is a digital audio broadcasting signal, to obtain first and second reproduced sound signals, each of which may represent the same audio program information and one of which is selected to be derived from the first or second audio broadcasting signal receiving portion, and which avoids effectively disadvantages resulting from a difference in level between the first and second reproduced sound signals.

A further object of the present invention is to provide an apparatus for receiving broadcasting signals, in which first and second audio broadcasting signal receiving portions are provided for receiving respectively first and second audio broadcasting signals, at least one of which is a digital audio broadcasting signal, to obtain first and second reproduced sound signals, each of which may represent the same audio program information and one of which is selected to be derived from the first or second audio broadcasting signal receiving portion, and which can prevent effectively the first and second reproduced sound signals from being derived successively with a discontinuation of signal between each other from the first and second audio broadcasting signal receiving portions when the signal selection is changed from one of the first and second reproduced sound signals to the other of the first and second reproduced sound signals.

A further object of the present invention is to provide an apparatus for receiving broadcasting signals, in which first and second audio broadcasting signal receiving portions are provided for receiving respectively first and second audio broadcasting signals, at least one of which is a digital audio broadcasting signal, to obtain first and second reproduced sound signals, each of which may represent the same audio program information and one of which is selected to be derived from the first or second audio broadcasting signal receiving portion, and which can reduce effectively a difference in level between the first and second reproduced sound signals.

A still further object of the present invention is to provide an apparatus for receiving broadcasting signals, in which first and second audio broadcasting signal receiving portions are provided for receiving respectively first and second audio broadcasting signals, at least one of which is a digital audio broadcasting signal, to obtain first and second reproduced sound signals, each of which may represent the same audio program information and one of which is selected to be derived from the first or second audio broadcasting signal receiving portion, and which can control automatically the level of the first or second reproduced sound signal for reducing a difference in level between the first and second reproduced sound signals.

According to the present invention, there is provided an apparatus for receiving broadcasting signals, which comprises first and second audio broadcasting signal receiving portions for receiving respectively first and second audio broadcasting signals, at least one of which is a digital audio broadcasting signal, in such as a manner that the first audio broadcasting signal is the digital audio broadcasting signal and the second audio broadcasting signal is an analog audio broadcasting signal, to obtain first and second reproduced sound signals, each of which may represent substantially the same audio program information, a reproduced signal selecting portion operative to derive selectively the first and second reproduced sound signals obtained from the first and second audio broadcasting signal receiving portions, respectively, a level difference detecting portion for detecting a difference in level between the first and second reproduced sound signals and producing a level difference detection output signal representing a detected level difference, and a signal control portion operative to control one of the first and second reproduced sound signals in response to the level difference detection output signal so as to reduce a difference in level between the first and second reproduced sound signals derived selectively through the reproduced signal selecting portion.

In one embodiment of apparatus for receiving broadcasting signals according to the present invention, a signal control portion constitutes a level adjuster for adjusting the level of one of the first and second reproduced sound signals derived from the reproduced signal selecting portion and an operation controller is provided for controlling the reproduced signal selecting portion to conduct selective derivation of one of the first and second reproduced sound signals and controlling also the level adjuster to conduct selectively a first level adjustment to the first reproduced sound signal derived from the reproduced signal selecting portion and a second level adjustment to the second reproduced sound signal derived from the reproduced signal selecting portion in response to the level difference detection output signal.

In another embodiment of apparatus for receiving broadcasting signals according to the present invention, a signal control portion constitutes a gain controller for causing one of the first and second reproduced sound signals obtained from the first and second audio broadcasting signal receiving portions, respectively, to be subjected to gain control in response to the level difference detection output signal and the reproduced signal selecting portion is operative to derive one of the first and second reproduced sound signals having been subjected to the gain control or the other of the first and second reproduced sound signals.

In the apparatus for receiving broadcasting signals thus constituted in accordance with the present invention, under a situation wherein one of the first and second reproduced sound signals obtained from the first and second audio broadcasting signal receiving portions, respectively, is derived through the reproduced signal selecting portion, the level difference detection output signal is produced by the level difference detecting portion to represent the difference in level between the first and second reproduced sound signals and one of the first and second reproduced sound signals is controlled by the signal control-portion in response to the level difference detection output signal. With such a control to one of the first and second reproduced sound signals by the signal control portion, the difference in level between the first and second reproduced sound signals derived selectively through the reproduced signal selecting portion is effectively reduced to be, for example, substantially zero.

Consequently, with the apparatus for receiving broadcasting signals according to the present invention, when the first and second reproduced sound signals, such as reproduced digital and analog audio broadcasting sound signals, are obtained respectively from the first and second audio broadcasting signal receiving portions with a relatively large difference in level between each other, it is possible to avoid disadvantages resulting from the difference in level between the first and second reproduced sound signals.

Especially, in the embodiment apparatus for receiving broadcasting signals according to the present invention, the operation controller for controlling the reproduced signal selecting portion and the level adjuster is provided and thereby selective derivation of one of the first and second reproduced sound signals is surely carried out by the reproduced signal selecting portion and the first level adjustment to the first reproduced sound signal derived from the reproduced signal selecting portion and the second level adjustment to the second reproduced sound signal derived from the reproduced signal selecting portion are appropriately carried out by the level adjuster in response to the level difference detection output signal.

Further, in another embodiment of apparatus for receiving broadcasting signals according to the present invention, one of the first and second reproduced sound signals obtained from the first and second audio broadcasting signal receiving portions, respectively, is subjected to gain control in response to the level difference detection output signal by the gain controller so as to have its level substantially equal to a level of the other of the first and second reproduced sound signals and one of the first and second reproduced sound signals having been subjected to the gain control or the other of the first and second reproduced sound signals is derived through the reproduced signal selecting portion. Therefore, the difference in level between the first and second reproduced sound signals derived selectively through the reproduced signal selecting portion is surely reduced.

The present invention will be further described by way of example with reference to the accompanying drawings, in which:-
Fig. 1 is a block diagram showing schematically an embodiment of apparatus for receiving broadcasting signals according to the present invention;
Fig. 2 is a block diagram showing schematically another embodiment of apparatus for receiving broadcasting signals according to the present invention; and
Fig. 3 is a block diagram showing schematically a further embodiment of apparatus for receiving broadcasting signals according to the present invention.

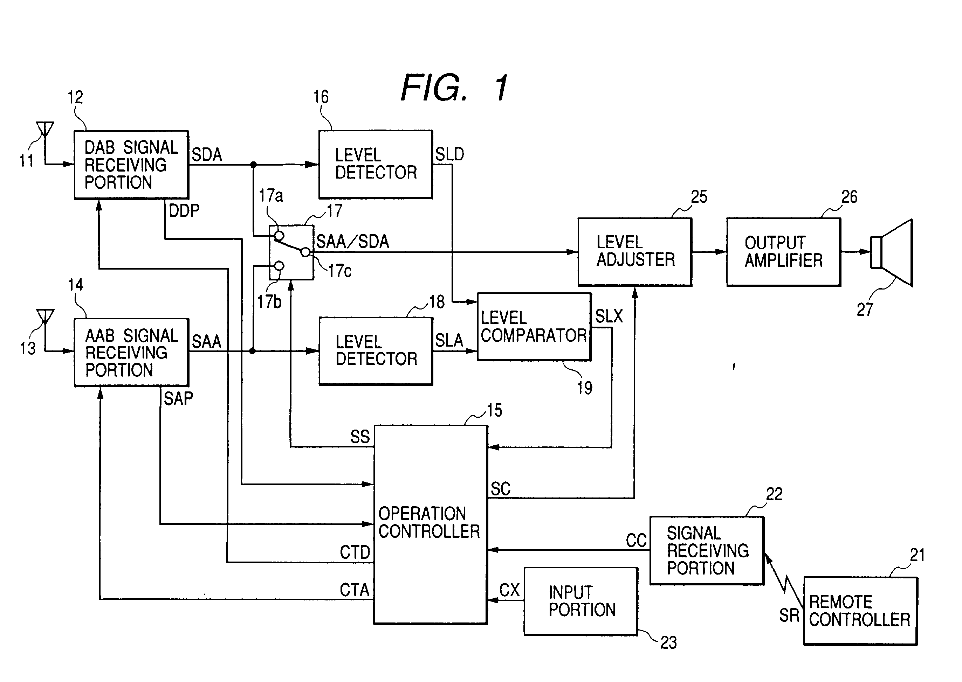

Fig. 1 shows schematically an embodiment of apparatus for receiving broadcasting signals according to the present invention.

Referring to Fig. 1, digital audio broadcasting signals transmitted from one or more broadcasting stations are supplied through an antenna 11 to a digital audio broadcasting signal receiving portion 12 and analog audio broadcasting signals transmitted from one or more broadcasting stations are supplied through an antenna 13 to an analog audio broadcasting signal receiving portion 14.

Tuning control signals CTD and CTA obtained from an operation controller 15 are also supplied to the digital audio broadcasting signal receiving portion 12 and the analog audio broadcasting signal receiving portion 14, respectively. In the digital audio broadcasting signal receiving portion 12, a selected one of the digital audio broadcasting signals supplied through the antenna 11 to the digital audio broadcasting signal receiving portion 12 is received with a tuning operation which is conducted in accordance with the tuning control signals CTD. In the analog audio broadcasting signal receiving portion 14, a selected one of the analog audio broadcasting signals supplied through the antenna 13 to the analog audio broadcasting signal receiving portion 14 is received with a tuning operation which is conducted in accordance with the tuning control signals CTA.

The digital audio broadcasting signal received by the digital audio broadcasting signal receiving portion 12 includes program information data representing audio program information and program related data which accompanies with the program information data to represent various kinds of information related to the contents of audio program information represented by the program information data, such as the name of program, the program source number and so on. The analog audio broadcasting signal received by the analog audio broadcasting signal receiving portion 14 includes a program information signal representing audio program information and a program related signal representing information related to the contents of audio program information represented by the program information signal.

In the digital audio broadcasting signal receiving portion 12, the received digital audio broadcasting signal is subjected to demodulation processing to produce the program information data and the program related data. The program information data and the program related data thus obtained from the received digital audio broadcasting signal are successively subjected to a time de-interleaving arrangement for releasing the program information data and the program related data from the time interleaving arrangement to revert to original data, decoding, D/A conversion and so on to produce a reproduced digital broadcasting sound signal SDA and reproduced program related data DDP based on the program information data and the program related data contained in the received digital audio broadcasting signal. The reproduced digital broadcasting sound signal SDA obtained from the digital audio broadcasting signal receiving portion 12 is supplied to both of a level detector 16 and a selective contact 17a of a switch 17 which constitutes a reproduced signal selecting portion. The reproduced program related data DDP obtained also from the digital audio broadcasting signal receiving portion 12 is supplied the operation controller 15.

In the analog audio broadcasting signal receiving portion 14, the received analog audio broadcasting signal is subjected to demodulation processing which includes, for example, frequency-demodulation and de-emphasis processings to produce a reproduced analog broadcasting sound signal SAA and a reproduced program related signal SAP based on the program information signal and the program related signal contained in the received analog audio broadcasting signal. The reproduced analog broadcasting sound signal SAA obtained from the analog audio broadcasting signal receiving portion 14 is supplied to both of a level detector 18 and a selective contact 17b of the switch 17. The reproduced program related signal SAP obtained also from the analog audio broadcasting signal receiving portion 14 is supplied the operation controller 15.

In the level detector 16, the level of the reproduced digital broadcasting sound signal SDA is detected to produce a level detection output signal SLD representing the detected level. In the level detector 18, the level of the reproduced analog broadcasting sound signal SAA is detected to produce a level detection output signal SLA representing the detected level. The level detection output signal SLD from the level detector 16 and the level detection output signal SLA from the level detector 18 are supplied to a level comparator 19.

In the level comparator 19, the level detection output signal SLD is compared with the level detection output signal SLA to produce as a comparison output a level difference output signal SLX representing a difference in level between the reproduced digital broadcasting sound signal SDA and the reproduced analog broadcasting sound signal SAA. The level difference output signal SLX obtained from the level comparator 19 is supplied to the operation controller 15. The operation controller 15 is operative to memorize renewably the level difference output signal SLX from the level comparator 19 under a condition in which the digital audio broadcasting signal is appropriately received by the digital audio broadcasting signal receiving portion 12 and the analog audio broadcasting signal is appropriately received by the analog audio broadcasting signal receiving portion 14.

The level detectors 16 and 18 and the level comparator 19 in the aggregate constitute a level difference detecting portion for obtaining the level difference output signal SLX representing the difference in level between the reproduced digital broadcasting sound signal SDA and the reproduced analog broadcasting sound signal SAA.

A control command CC which is forwarded from a signal receiving portion 22 in response to a remote control signal SR transmitted from a remote controller 21 and received by the signal receiving portion 22 and a control command CX which is forwarded from an input portion 23 in response to manipulations thereon are also supplied to the operation controller 15. The operation controller 15 performs control operations in accordance with the control commands CC and CX.

Under such a situation as mentioned above, the operation controller 15 is operative to seize a receiving condition of the digital audio broadcasting signal by the digital audio broadcasting signal receiving portion 12, the contents of the audio program information represented by the reproduced digital broadcasting sound signal SDA obtained from the digital audio broadcasting signal receiving portion 12 and so forth on the strength of the reproduced program related data DDP from the digital audio broadcasting signal receiving portion 12, and further operative to seize a receiving condition of the analog audio broadcasting signal by the analog audio broadcasting signal receiving portion 14, the contents of the audio program information represented by the reproduced analog broadcasting sound signal SAA obtained from the analog audio broadcasting signal receiving portion 14 and so forth on the strength of the reproduced program related signal SAP from the analog audio broadcasting signal receiving portion 14.

In addition, the operation controller 15 is operative to supply the switch 17 with a control signal SS in obedience to the control command CC or CX under a situation in which each of the digital audio broadcasting signal selected to be received by the digital audio broadcasting signal receiving portion 12 and the analog audio broadcasting signal selected to be received by the analog audio broadcasting signal receiving portion 14 represents substantially the same audio program information. The switch 17 is controlled by the control signal SS, for example, to cause a movable contact 17c to be connected with the selective contact 17a so that the reproduced digital broadcasting sound signal SDA supplied from the digital audio broadcasting signal receiving portion 12 to the selective contact 17a is selected to be derived from the movable contact 17c when the selected digital audio broadcasting signal is appropriately received by the digital audio broadcasting signal receiving portion 12, and to cause a movable contact 17c to be connected with the selective contact 17b so that the reproduced analog broadcasting sound signal SAA supplied from the analog audio broadcasting signal receiving portion 14 to the selective contact 17b is selected to be derived from the movable contact 17c when the selected analog audio broadcasting signal is appropriately received by the analog audio broadcasting signal receiving portion 14.

Accordingly, the switch 17 is operative to extract one of the reproduced digital broadcasting sound signal SDA obtained from the digital audio broadcasting signal receiving portion 12 and the reproduced analog broadcasting sound signal SAA obtained from the analog audio broadcasting signal receiving portion 14 in such a manner that a condition in which the reproduced digital broadcasting sound signal SDA is selected to be derived from the movable contact 17c of the switch 17 is changed into a condition in which the reproduced analog broadcasting sound signal SAA is selected to be derived from the movable contact 17c of the switch 17 or the condition in which the reproduced analog broadcasting sound signal SAA is selected to be derived from the movable contact 17c of the switch 17 is changed into the condition in which the reproduced digital broadcasting sound signal SDA is selected to be derived from the movable contact 17c of the switch 17 in response to the receiving condition of the digital audio broadcasting signal by the digital audio broadcasting signal receiving portion 12 when each of the digital audio broadcasting signal selected to be received by the digital audio broadcasting signal receiving portion 12 and the analog audio broadcasting signal selected to be received by the analog audio broadcasting signal receiving portion 14 represents substantially the same audio program information.

The reproduced digital broadcasting sound signal SDA or the reproduced analog broadcasting sound signal SAA derived from the movable contact 17c of the switch 17 is supplied to a level adjuster 25. A level control signal SC from operation controller 15 is also supplied to the level adjuster 25. In the level adjuster 25, the level of the reproduced digital broadcasting sound signal SDA or the reproduced analog broadcasting sound signal SAA from the switch 17 is controlled in response to the level control signal SC.

The reproduced digital broadcasting sound signal SDA or the reproduced analog broadcasting sound signal SAA subjected to the level control in the level adjuster 25 and obtained from the level adjuster 25 is amplified by an output amplifier 26 to be supplied to a speaker 27. As a result, reproduced sound related to the contents of the audio program information represented by the reproduced digital broadcasting sound signal SDA or the reproduced analog broadcasting sound signal SAA, namely, an audio program is obtained from the speaker 27.

The level control to which the reproduced digital broadcasting sound signal SDA or the reproduced analog broadcasting sound signal SAA subjected is subjected in the level adjuster 25 is carried out in such a manner as described below, for example.

First, the operation controller 15 produces the level control signal SC in response to the control command CC from the signal receiving portion 22 or the control command CX from the input portion 23 and supplies the level adjuster 25 with the level control signal SC when the reproduced digital broadcasting sound signal SDA is derived from the movable contact 17c of the switch 17 to be supplied to the level adjuster 25. With this level control signal SC, the level of the reproduced digital broadcasting sound signal SDA is so adjusted that the reproduced sound obtained from the speaker 27 based on the reproduced digital broadcasting sound signal SDA is obtained from the speaker 27 with its volume pleasant to listeners.

Next, when the condition in which the reproduced digital broadcasting sound signal SDA is selected to be derived from the movable contact 17c of the switch 17 is changed into the condition in which the reproduced analog broadcasting sound signal SAA is selected to be derived from the movable contact 17c of the switch 17 and thereby a condition in which the reproduced digital broadcasting sound signal SDA from the switch 17 is supplied to the level adjuster 25 is changed into a condition in which the reproduced analog broadcasting sound signal SAA from the switch 17 is supplied to the level adjuster 25, the operation controller 15 produces a signal component corresponding to the level difference output signal SLX which is memorized renewably in the operation controller 15, in other words, a signal component corresponding to the difference in level between the reproduced digital broadcasting sound signal SDA and the reproduced analog broadcasting sound signal SAA under the condition in which the digital audio broadcasting signal is appropriately received by the digital audio broadcasting signal receiving portion 12 and the analog audio broadcasting signal is appropriately received by the analog audio broadcasting signal receiving portion 14, and adds the signal component to the level control signal SC supplied to the level adjuster 25. With the level control signal SC to which the aforementioned signal component is added, the level of the reproduced analog broadcasting sound signal SAA from the switch 17 is adjusted in response to the difference in level between the reproduced digital broadcasting sound signal SDA and the reproduced analog broadcasting sound signal SAA in the level adjuster 25. Consequently, the reproduced analog broadcasting sound signal SAA obtained from the level adjuster 25 to be supplied to the output amplifier 26 has its level substantially equal to the level of the reproduced digital broadcasting sound signal SDA which is obtained from the level adjuster 25 to be supplied to the output amplifier 26 when the reproduced digital broadcasting sound signal SDA is derived from the movable contact 17c of the switch 17.

Then, when the condition in which the reproduced analog broadcasting sound signal SAA is selected to be derived from the movable contact 17c of the switch 17 is changed into the condition in which the reproduced digital broadcasting sound signal SDA is selected to be derived-from the movable contact 17c of the switch 17 and thereby the condition in which the reproduced analog broadcasting sound signal SAA from the switch 17 is supplied to the level adjuster 25 is changed into the condition in which the reproduced digital broadcasting sound signal SDA from the switch 17 is supplied to the level adjuster 25, the operation controller 15 produces again the signal component corresponding to the level difference output signal SLX which is memorized renewably in the operation controller 15, in other words, the signal component corresponding to the difference in level between the reproduced digital broadcasting sound signal SDA and the reproduced analog broadcasting sound signal SAA under the condition in which the digital audio broadcasting signal is appropriately received by the digital audio broadcasting signal receiving portion 12 and the analog audio broadcasting signal is appropriately received by the analog audio broadcasting signal receiving portion 14, and adds the signal component to the level control signal SC supplied to the level adjuster 25. With the level control signal SC to which the aforementioned signal component is added, the level of the reproduced digital broadcasting sound signal SDA from the switch 17 is adjusted in response to the difference in level between the reproduced digital broadcasting sound signal SDA and the reproduced analog broadcasting sound signal SAA in the level adjuster 25. Therefore, the reproduced digital broadcasting sound signal SDA obtained from the level adjuster 25 to be supplied to the output amplifier 26 has its level substantially equal to the level of the reproduced analog broadcasting sound signal SAA which is obtained from the level adjuster 25 to be supplied to the output amplifier 26 when the reproduced analog broadcasting sound signal SAA is derived from the movable contact 17c of the switch 17.

After that, such a level adjustment in the level adjuster 25 as described above is repeatedly carried out whenever the condition in which the reproduced digital broadcasting sound signal SDA from the switch 17 is supplied to the level adjuster 25 is changed into the condition in which the reproduced analog broadcasting sound signal SAA from the switch 17 is supplied to the level adjuster 25 or the condition in which the reproduced analog broadcasting sound signal SAA from the switch 17 is supplied to the level adjuster 25 is changed into the condition in which the reproduced digital broadcasting sound signal SDA from the switch 17 is supplied to the level adjuster 25. Consequently, even though the reproduced digital broadcasting sound signal SDA and the reproduced analog broadcasting sound signal SAA are obtained respectively from the digital audio broadcasting signal receiving portion 12 and the analog audio broadcasting signal receiving portion 14 with a relatively large difference in level between each other, each of the reproduced digital broadcasting sound signal SDA and the reproduced analog broadcasting sound signal SAA obtained selectively from the level adjuster 25 to be supplied to the output amplifier 26 has substantially the same level.

As a result, in each of the case where the reproduced digital broadcasting sound signal SDA is supplied from the level adjuster 25 to the output amplifier 26 and the case where the reproduced analog broadcasting sound signal SAA is supplied from the level adjuster 25 to the output amplifier 26, the reproduced sound is obtained from the speaker 27 with substantially the same volume and therefore disadvantages resulting from the difference in level between the reproduced digital broadcasting sound signal SDA and the reproduced analog broadcasting sound signal SAA, each of which represents substantially the same audio program information, are effectively reduced.

Although the level adjuster 25 is put in both of the condition in which the reproduced digital broadcasting sound signal SDA obtained from the switch 17 is subjected to the level adjustment performed in response to the level difference output signal SLX and the condition in which the reproduced analog broadcasting sound signal SAA obtained from the switch 17 is subjected to the level adjustment performed in response to the level difference output signal SLX, it is not necessary to restrict the level adjuster 25 to be so and the level adjuster 25 can be put in only one of the condition in which the reproduced digital broadcasting sound signal SDA obtained from the switch 17 is subjected to the level adjustment performed in response to the level difference output signal SLX and the condition in which the reproduced analog broadcasting sound signal SAA obtained from the switch 17 is subjected to the level adjustment performed in response to the level difference output signal SLX.

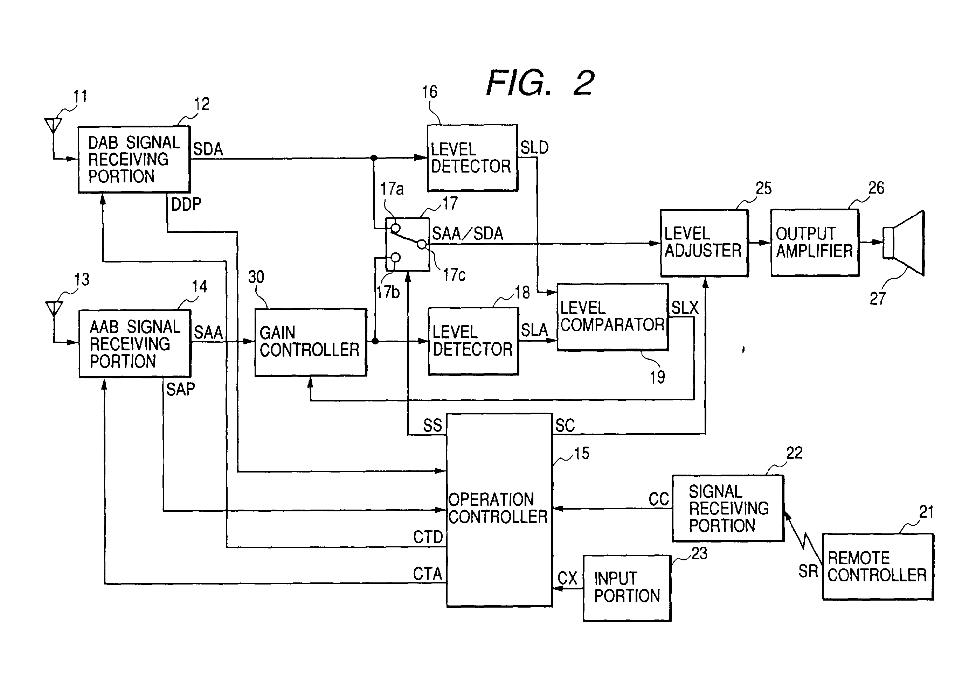

Fig. 2 shows schematically another embodiment of apparatus for receiving broadcasting signals according to the present invention. The embodiment shown in Fig. 2 has a number of portions which are constituted in the same manner as those of the embodiment shown in Fig. 1 and explained above. In Fig. 2, blocks and data or signals corresponding to those in Fig. 1 are marked with the same references and further description thereof will be omitted.

Referring to Fig. 2, a reproduced analog broadcasting sound signal SAA obtained from an analog audio broadcasting signal receiving portion 14 is supplied to a gain controller 30 and the reproduced analog broadcasting sound signal SAA subjected to a gain control in the gain controller 30 is supplied to both of a level detector 18 and a selective contact 17b of a switch 17 which constitutes a reproduced signal selecting portion. A level difference output signal SLX obtained from a level comparator 19 is also supplied to the gain controller 30.

In the gain controller 30, the reproduced analog broadcasting sound signal SAA obtained from the analog audio broadcasting signal receiving portion 14 is subjected to the gain control performed in response to the level difference output signal SLX which is obtained from the level comparator 19 under a condition in which a digital audio broadcasting signal is appropriately received by a digital audio broadcasting signal receiving portion 12 and an analog audio broadcasting signal is appropriately received by the analog audio broadcasting signal receiving portion 14.

The gain control to which the reproduced analog broadcasting sound signal SAA is subjected in the gain controller 30 is carried out so that the level difference output signal SLX obtained from the level comparator 19 represents that a level detection output signal SLD from a level detector 16 and a level detection output signal SLA from the level detector 18 are substantially equal in level to each other, in other words, a reproduced digital broadcasting sound signal SDA supplied to a selective contact 17a of the switch 17 and the reproduced analog broadcasting sound signal SAA supplied to the selective contact 17b of the switch 17 are substantially equal in level to each other.

In the embodiment shown in Fig. 2, a level control signal SC supplied from an operation controller 15 to a level adjuster 25 is produced, for example, in response to a control command CC obtained from a signal receiving portion 22 or a control command CX obtained from an input portion 23. With this level control signal SC, the level of the reproduced digital broadcasting sound signal SDA or the reproduced analog broadcasting sound signal SAA is adjusted in the level adjuster 25 so that reproduced sound based on the reproduced digital broadcasting sound signal SDA or the reproduced analog broadcasting sound signal SAA is obtained from a speaker 27 with its volume pleasant to listeners. Other operations in the embodiment shown in Fig. 2 are carried out in the same manner as those in the embodiment shown in Fig. 1.

With the gain control to which the reproduced analog broadcasting sound signal SAA is subjected in the gain controller 30 in such a manner as described above, in each of the case where the reproduced digital broadcasting sound signal SDA is selected to be derived from the switch 17 and supplied through the level adjuster 25 to an output amplifier 26 and the case where the reproduced analog broadcasting sound signal SAA is selected to be derived from the switch 17 and supplied through the level adjuster 25 to the output amplifier 26, the reproduced sound is obtained from the speaker 27 with substantially the same volume and therefore disadvantages resulting from the difference in level between the reproduced digital broadcasting sound signal SDA and the reproduced analog broadcasting sound signal SAA, each of which represents substantially the same audio program information, are effectively reduced.

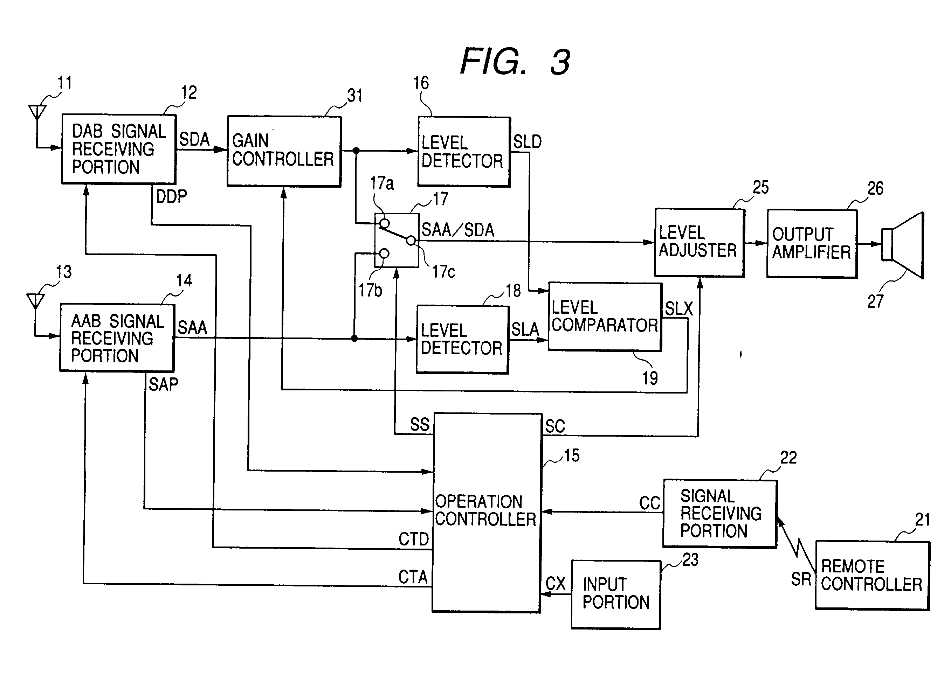

Fig. 3 shows schematically a further embodiment of apparatus for receiving broadcasting signals according to the present invention. The embodiment shown in Fig. 3 has also a number of portions which are constituted in the same manner as those of the embodiment shown in Fig. 1 and explained above. In Fig. 3, blocks and data or signals corresponding to those in Fig. 1 are marked with the same references and further description thereof will be omitted.

Referring to Fig. 3, a reproduced digital broadcasting sound signal SDA obtained from a digital audio broadcasting signal receiving portion 12 is supplied to a gain controller 31 and the reproduced digital broadcasting sound signal SDA subjected to a gain control in the gain controller 31 is supplied to both of a level detector 16 and a selective contact 17a of a switch 17 which constitutes a reproduced signal selecting portion. A level difference output signal SLX obtained from a level comparator 19 is also supplied to the gain controller 31.

In the gain controller 31, the reproduced digital broadcasting sound signal SDA obtained from the digital audio broadcasting signal receiving portion 12 is subjected to the gain control performed in response to the level difference output signal SLX which is obtained from the level comparator 19 under a condition in which a digital audio broadcasting signal is appropriately received by the digital audio broadcasting signal receiving portion 12 and an analog audio broadcasting signal is appropriately received by an analog audio broadcasting signal receiving portion 14.

The gain control to which the reproduced digital broadcasting sound signal SDA is subjected in the gain controller 31 is carried out so that the level difference output signal SLX obtained from the level comparator 19 represents that a level detection output signal SLD from the level detector 16 and a level detection output signal SLA from a level detector 18 are substantially equal in level to each other, in other words, the reproduced digital broadcasting sound signal SDA supplied to the selective contact 17a of the switch 17 and a reproduced analog broadcasting sound signal SAA supplied to a selective contact 17b of the switch 17 are substantially equal in level to each other.

In the embodiment shown in Fig. 3 also, a level control signal SC supplied from an operation controller 15 to a level adjuster 25 is produced, for example, in response to a control command CC obtained from a signal receiving portion 22 or a control command CX obtained from an input portion 23. With this level control signal SC, the level of the reproduced digital broadcasting sound signal SDA or the reproduced analog broadcasting sound signal SAA is adjusted in the level adjuster 25 so that reproduced sound based on the reproduced digital broadcasting sound signal SDA or the reproduced analog broadcasting sound signal SAA is obtained from a speaker 27 with its volume pleasant to listeners. Other operations in the embodiment shown in Fig. 3 are carried out in the same manner as those in the embodiment shown in Fig. 1.

With the gain control to which the reproduced digital broadcasting sound signal SDA is subjected in the gain controller 31 in such a manner as described above, in each of the case where the reproduced digital broadcasting sound signal SDA is selected to be derived from the switch 17 and supplied through the level adjuster 25 to an output amplifier 26 and the case where the reproduced analog broadcasting sound signal SAA is selected to be derived from the switch 17 and supplied through the level adjuster 25 to the output amplifier 26, the reproduced sound is obtained from the speaker 27 with substantially the same volume and therefore disadvantages resulting from the difference in level between the reproduced digital broadcasting sound signal SDA and the reproduced analog broadcasting sound signal SAA, each of which represents substantially the same audio program information, are effectively reduced.

## Claims

1. An apparatus for receiving broadcasting signals comprising;
first and second audio broadcasting signal receiving portions for receiving first and second audio broadcasting signals, at least one of which is a digital audio broadcasting signal, to obtain first and second reproduced sound signals each of which may represent substantially the same audio program information,
a reproduced signal selecting portion operative to derive selectively the first and second reproduced sound signals obtained from the first and second audio broadcasting signal receiving portions, respectively,
a level difference detecting portion for detecting a difference in level between the first and second reproduced sound signals and producing a level difference detection output signal representing a detected level difference, and
a signal control portion operative to control one of the first and second reproduced sound signals in response to the level difference output signal so as to reduce a difference in level between the first and second reproduced sound signals derived selectively through the reproduced signal selecting portion.

2. An apparatus for receiving broadcasting signals according to claim 1, wherein said first audio broadcasting signal receiving portions is constituted to receive the digital audio broadcasting signal and produce the first reproduced sound signal and said second audio broadcasting signal receiving portions is constituted to receive an analog audio broadcasting signal and produce the second reproduced sound signal.

3. An apparatus for receiving broadcasting signals according to claim 2, wherein said signal control portion constitutes a level adjuster put in at lease one of a first condition in which the first reproduced sound signal is subjected to a level adjustment performed in response to the level difference output signal when the first reproduced sound signal is derived from the reproduced signal selecting portion and a second condition in which the second reproduced sound signal is subjected to level adjustment performed in response to the level difference output signal when the second reproduced sound signal is derived from the reproduced signal selecting portion.

4. An apparatus for receiving broadcasting signals according to claim 3, wherein said level adjuster is operative to perform, in response to the level difference output signal, at least one of a first level adjustment to which the second reproduced sound signal obtained from the reproduced signal selecting portion is subjected when a first condition in which the first reproduced sound signal is derived from the reproduced signal selecting portion is changed into a second condition in which the second reproduced sound signal is derived from the reproduced signal selecting portion and a second level adjustment to which the first reproduced sound signal obtained from the reproduced signal selecting portion is subjected when the second condition in which the second reproduced sound signal is derived from the reproduced signal selecting portion is changed into the first condition in which the first reproduced sound signal is derived from the reproduced signal selecting portion.

5. An apparatus for receiving broadcasting signals according to claim 3, wherein an operation controller is provided for causing the reproduced signal selecting portion to derive one of the first and second reproduced sound signals and causing the level adjuster to perform, in response to the level difference output signal, at least one of the first level adjustment to which the first reproduced sound signal obtained from the reproduced signal selecting portion is subjected when the first reproduced sound signal is derived from the reproduced signal selecting portion and the second level adjustment to which the first reproduced sound signal obtained from the reproduced signal selecting portion is subjected when the second reproduced sound signal is derived from the reproduced signal selecting portion.

6. An apparatus for receiving broadcasting signals according to claim 5, wherein said operation controller is operative to change the first condition in which the first reproduced sound signal is derived from the reproduced signal selecting portion into the second condition in which the'second reproduced sound signal is derived from the reproduced signal selecting portion and to change also the second condition in which the second reproduced sound signal is derived from the reproduced signal selecting portion into the first condition in which the first reproduced sound signal is derived from the reproduced signal selecting portion.

7. An apparatus for receiving broadcasting signals according to claim 1, wherein said level difference detecting portion comprising a first level detector for detecting a level of the first reproduced sound signal, a second level detector for detecting a level of the second reproduced sound signal, and a level comparator for comparing the level detected by the first level detector with the level detected by the second level detector.

8. An apparatus for receiving broadcasting signals according to claim 2, wherein said signal control portion constitutes a gain controller for performing gain control to one of the first reproduced sound signal and the second reproduced sound signal in response to the level difference output signal.

9. An apparatus for receiving broadcasting signals according to claim 8, wherein said gain controller is operative to perform the gain control to the second reproduced sound signal and said reproduced signal selecting portion is operative to derive one of the first reproduced sound signal and the second reproduced sound signal subjected to the gain control performed by said gain controller.

10. An apparatus for receiving broadcasting signals according to claim 8, wherein said gain controller is operative to perform the gain control to the first reproduced sound signal and said reproduced signal selecting portion is operative to derive one of the second reproduced sound signal and the first reproduced sound signal subjected to the gain control performed by said gain controller.

11. An apparatus for receiving broadcasting signals according to claim 8, wherein an operation controller is provided for causing the reproduced signal selecting portion to derive one of the first and second reproduced sound signals.

12. An apparatus for receiving broadcasting signals according to claim 11, wherein said operation controller is operative to cause the reproduced signal selecting portion to derive one of the first reproduced sound signal and the second reproduced sound signal subjected to the gain control in the gain controller.

13. An apparatus for receiving broadcasting signals according to claim 11, wherein said operation controller is operative to cause the reproduced signal selecting portion to derive one of the second reproduced sound signal and the first reproduced sound signal subjected to the gain control in the gain controller.

14. An apparatus for receiving broadcasting signals according to claim 8, wherein said level difference detecting portion comprising a first level detector for detecting a level of the first reproduced sound signal, a second level detector for detecting a level of the second reproduced sound signal, and a level comparator'for comparing the level detected by the first level detector with the level detected by the second level detector.
